(19) Europäisches Patentamt / European Patent Office / Office européen des brevets

(11) **EP 4 693 248 A1**

(12) **EUROPEAN PATENT APPLICATION**
published in accordance with Art. 153(4) EPC

(43) Date of publication:
**11.02.2026 Bulletin 2026/07**

(21) Application number: **23930541.0**

(22) Date of filing: **30.03.2023**

(51) International Patent Classification (IPC):
**G08B 25/04** (2006.01)      **G08B 21/02** (2006.01)

(52) Cooperative Patent Classification (CPC):
**G08B 21/02; G08B 25/04**

(86) International application number:
**PCT/JP2023/013218**

(87) International publication number:
**WO 2024/201903 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicants:
• **IC Co., Ltd.**
  **Tokyo 108-6207 (JP)**
• **Feat Limited**
  **Tokyo 105-0012 (JP)**

(72) Inventor: **ARIMITSU, Akihiko**
**Tokyo 105-0012 (JP)**

(74) Representative: **Kilian Kilian & Partner mbB**
**Zielstattstraße 23a**
**81379 München (DE)**

(54) **MONITORING SUPPORT SYSTEM, DEVICE, METHOD, AND PROGRAM**

(57) A monitoring support system is provided, including a sensor information acquisition unit that acquires time-series sensor information detected at one or more sensors provided in a living space of a person to be monitored, a feature amount generation unit that generates a feature amount based on the time-series sensor information, a factor analysis unit that performs factor analysis based on the feature amount using a predetermined factor, a temporal change specification unit that specifies a temporal change of the factor based on a result of the factor analysis, and a prediction information generation unit that generates prediction information regarding state transition of the person to be monitored based on the temporal change.

FIG. 11

EP 4 693 248 A1

## Description

Technical Field

The present invention relates to a system, and more particularly, to a system, and the like, that support monitoring of elderly people, and the like.

Background Art

With the coming of an aged society, there is increasing need for a system that supports monitoring of lives of elderly people, people who need nursing care, and the like, from a remote place, and the like, and various monitoring support systems have been proposed in related art. For example, Patent Literature 1 discloses a system that monitors a living situation of a person to be monitored via detection values of sensors provided in a living space.

Citation List

Patent Literature

Patent Literature 1: Japanese Patent Laid-Open No. 2016-173732

Summary of Invention

Technical Problem

By the way, most systems (for example, Patent Literature 1) in related art specify a current state of a person to be monitored via sensors and make a predetermined notification to a monitoring person in a case where the state satisfies a predetermined condition.
However, with such a configuration, the monitoring person cannot make a forecast for what will happen, and thus, needs to be always in a state of being able to confirm the monitoring support system, which is great burden of monitoring.
The present invention has been made in view of the above-described technical background, and an object thereof is to provide a system, and the like, capable of reducing monitoring burden of a monitoring person.

Solution to Problem

The above-described technical problem can be solved by a monitoring support system, and the like, having the following configuration.
In other words, a monitoring support system according to the present invention includes a sensor information acquisition unit that acquires time-series sensor information detected at one or more sensors provided in a living space of a person to be monitored, a feature amount generation unit that generates a feature amount based on the time-series sensor information, a factor analysis unit that performs factor analysis based on the feature amount using a predetermined factor, a temporal change specification unit that specifies a temporal change of the factor based on a result of the factor analysis, and a prediction information generation unit that generates prediction information regarding state transition of the person to be monitored based on the temporal change.
According to such a configuration, it is possible to generate the prediction information regarding the state transition of the person to be monitored from the change of the factor behind the feature amount obtained from time-series sensor information detected at the sensor provided in the living space of the person to be monitored. A monitoring person can make a certain forecast for a state of the person to be monitored based on the prediction information, so that monitoring burden is reduced.

Advantageous Effect of Invention

According to the present invention, it is possible to reduce monitoring burden of a monitoring person.

Brief Description of Drawings

[Figure 1] Figure 1 is an overall configuration diagram of a monitoring support system.

[Figure 2] Figure 2 is a hardware configuration diagram of an information processing device.

[Figure 3] Figure 3 is a hardware configuration diagram of a server device.

[Figure 4] Figure 4 is an explanatory diagram illustrating an example where a sensor device is arranged in a kitchen.

[Figure 5] Figure 5 is an explanatory diagram illustrating an example where the sensor device is installed in a bedroom.

[Figure 6] Figure 6 is an explanatory diagram illustrating an example where the sensor device is attached to a handrail in a corridor.

[Figure 7] Figure 7 is an explanatory diagram illustrating an example where the sensor device is attached to an armed chair placed in a room.

[Figure 8] Figure 8 is an explanatory diagram illustrating another example where the sensor device is installed in the bedroom.

[Figure 9] Figure 9 is an explanatory diagram illustrating an example where the sensor device is attached to a door through which a person moves between rooms.

[Figure 10] Figure 10 is a functional block diagram of the server device when learning processing is executed.

[Figure 11] Figure 11 is a functional block diagram of the server device when monitoring support operation is performed.

[Figure 12] Figure 12 is an example of a screen to be displayed at the information processing device when processing of associating the sensor device is performed.

[Figure 13] Figure 13 is an explanatory diagram indicating a relationship between rooms and states of a person to be monitored.

[Figure 14] Figure 14 is a general flowchart regarding learning processing.

[Figure 15] Figure 15 is a detailed flowchart (No. 1) of pre-processing.

[Figure 16] Figure 16 is a general flowchart regarding monitoring processing.

[Figure 17] Figure 17 is a detailed flowchart (No. 2) of the pre-processing.

[Figure 18] Figure 18 is an explanatory diagram indicating a display example of an amount of activity.

[Figure 19] Figure 19 is an explanatory diagram indicating another display example of the amount of activity.

[Figure 20] Figure 20 is a detailed flowchart of factor analysis processing.

[Figure 21] Figure 21 is an explanatory diagram regarding combinations of factor transition.

Description of Embodiments

Hereinafter, preferred embodiments of the present invention will be described in detail with reference to the accompanying drawings.

(1. First Embodiment)

An example will be described as a first embodiment where the present invention is applied to a monitoring support system 100 of elderly people, people who need nursing care, and the like. Note that in the present embodiment, for convenience sake, a person who performs monitoring by utilizing the monitoring support system 100 will be referred to as a monitoring person, and a person who is monitored by the monitoring support system 100 will be referred to as a person to be monitored.

(1.1 Configuration of Monitoring Support System)

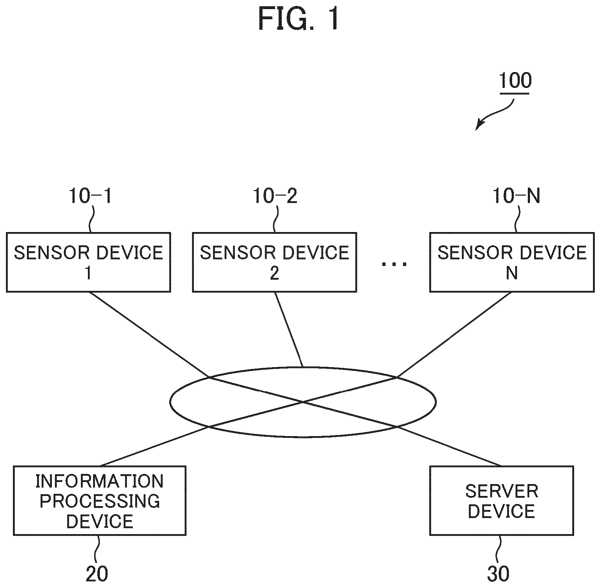

Figure 1 is an overall configuration diagram of the monitoring support system 100 according to the present embodiment. As is clear from the drawing, the monitoring support system 100 includes a plurality of sensor devices 10 (a sensor device 1 (10-1), a sensor device 2 (10-2), ..., a sensor device N (10-N)), an information processing device 20, and a server device 30, and these devices are connected to one another via a network such as the Internet. Note that a configuration of the present network is an example. Further, the server device 30 may be implemented on cloud.

As will be described later, the sensor device 10 is arranged so as to correspond to each room of a living space of the person to be monitored. The sensor device 10 includes a sensor for sensing the person to be monitored, a storage unit such as a ROM and a RAM which stores programs and various kinds of data, a control unit such as a CPU, and a communication unit including a communication unit for providing and receiving information to and from an external device. Information detected at the sensor of the sensor device 10 is transmitted to other devices, for example, the server device 30 via a network.

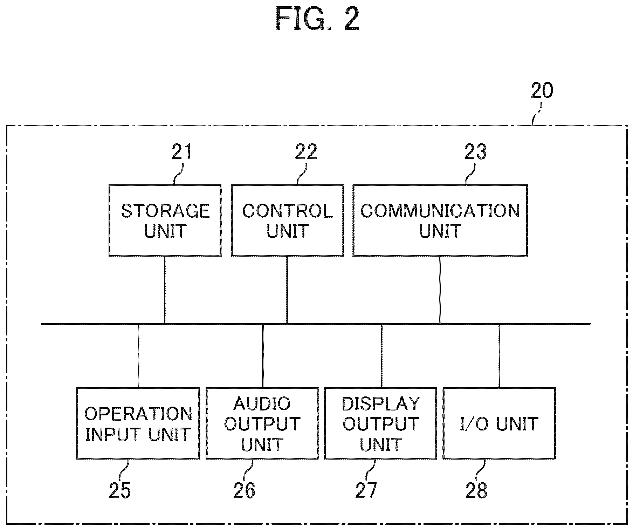

Figure 2 is a hardware configuration diagram of the information processing device 20 according to the present embodiment. As is clear from the drawing, the information processing device 20 includes a storage unit 21, a control unit 22, a communication unit 23, an operation input unit 25, an audio output unit 26, a display output unit 27 and an I/O unit 28, and these are connected to one another via a bus, and the like.

The storage unit 21, which is a storage unit such as a ROM/RAM, a hard disk and a flash memory, stores various kinds of programs or data for executing operation which will be described later. The control unit 22, which is a control device such as a CPU, executes programs to implement various kinds of operation which will be described later. The communication unit 23 is a communication unit for providing and receiving information to and from an external device via a network. The operation input unit 25 provides input information detected via an input device such as a mouse, a keyboard and a touch panel to the control unit 22. The audio output unit 26 performs audio output to an output device such as a connected speaker in accordance with control by the control unit 22. The display output unit 27 outputs image information to a display output device such as a display in accordance with control by the control unit 22. The I/O unit 28 performs input/output processing to/from an external device.

The information processing device 20 provides/receives information to/from the sensor device 10 or the server device 30. The monitoring person or a person who introduces the system can perform various kinds of setting processing which will be described later by operating the information processing device 20. Further, various kinds of information which will be described later can be presented to the monitoring person via the information processing device 20.

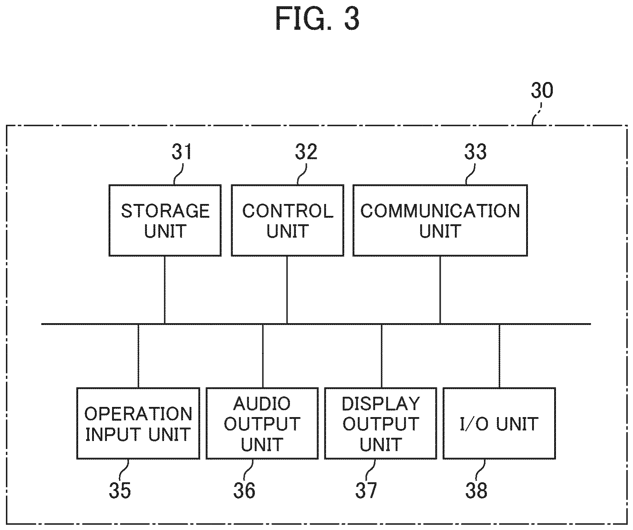

Figure 3 is a hardware configuration diagram of the server device 30 according to the present embodiment. As is clear from the drawing, the server device 30 includes a storage unit 31, a control unit 32, a communication unit 33, an operation input unit 35, an audio output unit 36, a display output unit 37, and an I/O unit 38, and these are connected to one another via a bus, and the like.

The storage unit 31, which is a storage unit such as a ROM/RAM, a hard disk and a flash memory, stores various kinds of programs or data for executing operation which will be described later. The control unit 32, which is a control device such as a CPU and a GPU, executes programs to implement various kinds of operation which will be described later. The communication unit 33 is a communication unit for providing/receiving information to/from an external device via a network. The operation input unit 35 provides input information detected via an input device such as a mouse, a keyboard and a touch panel to the control unit 32. The audio output unit 36 performs audio output to an output device such as a connected speaker in accordance with control by the control unit 32. The display output unit 37 outputs image information to a display output device such as a display in accordance with control by the control unit 32. The I/O unit 38 performs input/output processing to/from an external device.

The server device 30 provides and receives information to and from the sensor device 10 or the information processing device 20 and executes various kinds of processing which will be described later.

The sensor device 10 is attached to various portions within the living space of the person to be monitored. The portions are, for example, a floor and a wall of the room, a handrail, home electrical appliance, furniture, and the like.

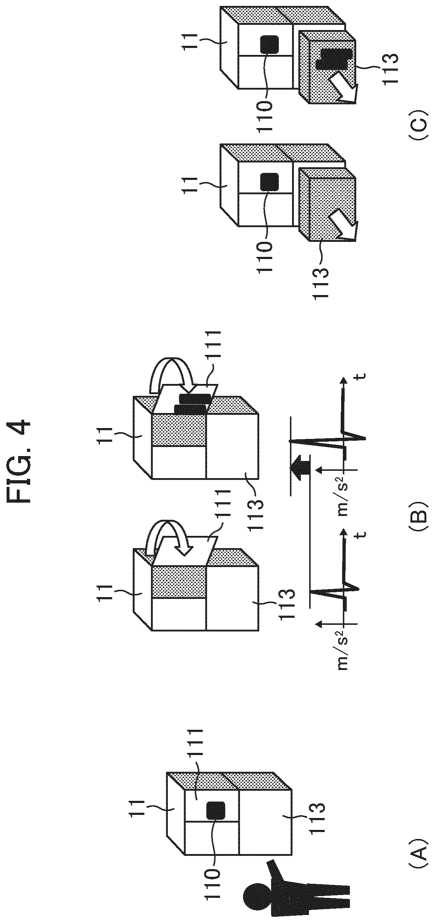

Figure 4 is an explanatory diagram illustrating an example where the sensor device 10 is attached to a refrigerator 11 arranged in a kitchen. As is clear from the drawing, the refrigerator 11 has a two-stage configuration including an upper part and a lower part, a pair of doors 111 is arranged in the upper part, and a slid-out storage 113 is arranged in the lower part. (A) of Figure 4 illustrates an overall configuration of the refrigerator when the doors are closed. (B) of Figure 4 is an explanatory diagram regarding opening and closing of the pair of doors 111 in the upper part. (C) of Figure 4 is an explanatory diagram regarding opening and closing of the storage 113 in the lower part.

As is clear from (A) of Figure 4, an acceleration sensor 110 as the sensor of the sensor device 10 is provided at each door of the pair of doors 111. Further, an acceleration sensor (not illustrated) as the sensor of the sensor device 10 is also provided at the storage 113 in the lower part.

As is clear from (B) of Figure 4, the acceleration sensor 110 is provided at each door of the pair of doors 111. Opening and closing of the door can be detected from a time-series signal obtained at this acceleration sensor 110. Further, if a container of drink, or the like, is stored inside the door, the door becomes heavy. As is clear from left and right drawings of (B) of Figure 4, this change of weight can be detected as a change of the detection value at the acceleration sensor 110, and thus, whether or not there is a container inside the door, and its interior content are also indirectly detected.

As is clear from (C) of Figure 4, the acceleration sensor (not illustrated) is provided at the storage 113, and opening and closing of the storage 113 can be detected from a time-series signal obtained at this acceleration sensor. Further, if a container of drink, or the like, is stored in the storage 113, a weight of the storage 113 becomes heavy. As is clear from left and right drawings of (C) of Figure 4, this change of the weight can be detected as a change of the detection value at the acceleration sensor, and thus, whether or not there is a container inside the storage 113 and its interior content are also indirectly detected.

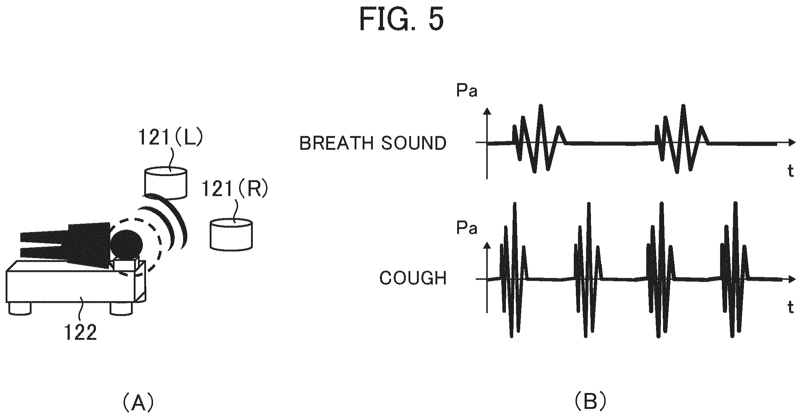

Figure 5 is an explanatory diagram illustrating an example where the sensor device 10 is installed in a bedroom. (A) of Figure 5 is a view illustrating an arrangement configuration example, and (B) of Figure 5 is an explanatory diagram regarding sound collection examples. As is clear from (A) of Figure 5, a pair of left and right microphones, that is, a microphone 121(L) and a microphone 121(R) are arranged around a bed 122 in the bedroom as the sensor of the sensor device 10. These microphones collect sound generated from the person to be monitored who is sleeping on the bed 122 in chronological order. For example, as indicated in (B) of Figure 5, breath sound and cough of the person to be monitored can be detected from sound pressure waveforms obtained by collecting sound thereof. Note that, in detection, sound in a target area (around the bed 122) may be collected by beamforming, or various kinds of publicly known signal processing such as removal of noise other than target sound may be performed.

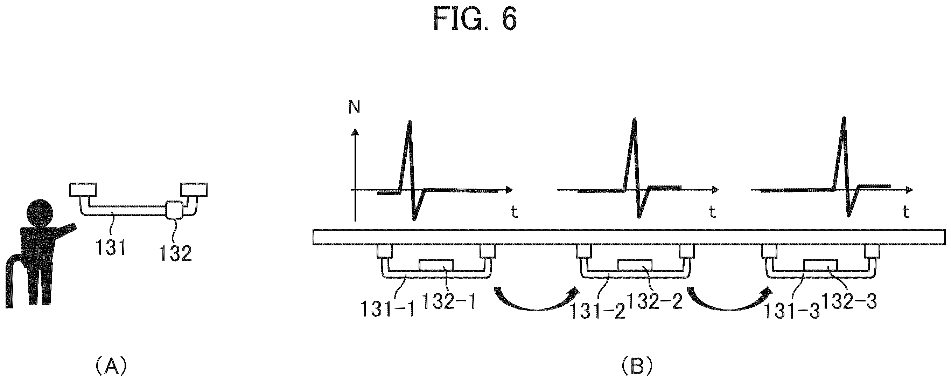

Figure 6 is an explanatory diagram illustrating an example where the sensor device 10 is attached to a handrail in a corridor. As illustrated in (A) of Figure 6, a strain sensor 132 is provided at a rod-like handrail 131 as the sensor of the sensor device 10. Load, torsion moment, and the like, applied to the handrail can be detected from a time-series signal obtained from this strain sensor 132. A state of the person to be monitored, for example, whether or not he/she has physically disabled arms or legs can be detected by detecting these.

Further, a strain sensor may be provided at each of a plurality of handrails. In (B) of Figure 6, three handrails 131 (131-1, 131-2, 131-3) are continuously arranged, and strain sensors 132 (132-1, 132-2, 132-3) are respectively attached to the handrails 131. According to such a configuration including a plurality of sensors, not only load and torsion moment can be detected at each strain sensor 132, but a moving speed of the person to be monitored who moves while holding on the handrails can be also calculated by analyzing time-series signals obtained from the respective strain sensors 132 in an integrated manner.

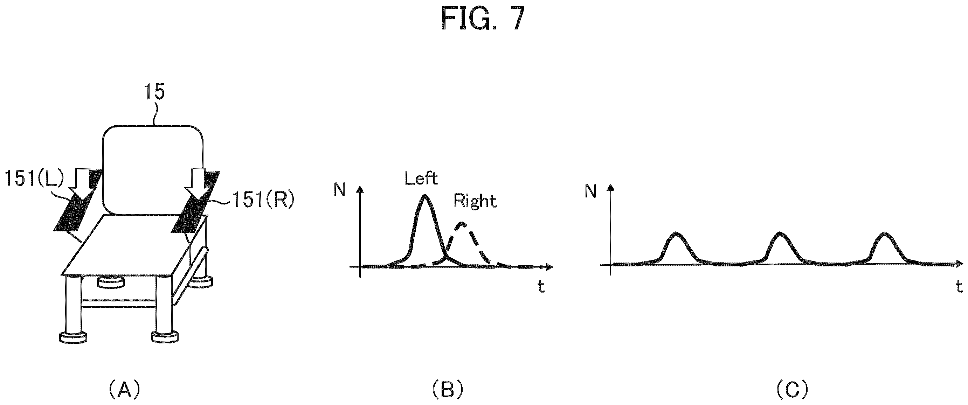

Figure 7 is an explanatory diagram illustrating an example where the sensor device 10 is attached to an armed chair placed in a room. As illustrated in (A) of Figure 7, a pair of strain sensors 151 (151(L), 151(R)) is attached to left and right armrests of an armed chair 15 as the sensor of the sensor device 10. Various kinds of information can be detected from time-series signals of load, vibration, strain, and the like, detected at this pair of strain sensors 151.

(B) of Figure 7 is an example of signals detected at the pair of strain sensors 151. A magnitude and a timing of detected load can be estimated from such signals, and a dominant hand, walking ability, a posture, breathing, and the like, of the person to be monitored can be estimated from a difference between signals from the left and right strain sensors, and the like.

(C) of Figure 7 is another example of the signal detected at the pair of strain sensors 151. A state of breathing, or the like, of the person to be monitored can be estimated from such a periodic signal.

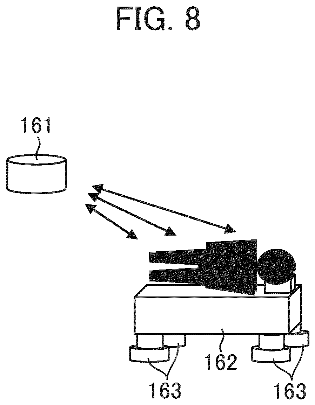

Figure 8 is an explanatory diagram illustrating another example where the sensor device 10 is installed in the bedroom. In the example of Figure 8, a strain sensor 163 is arranged on a back side of each of four legs of a bed 162 as the sensor of the sensor device 10. For example, a state of the person to be monitored on the bed 162 can be estimated from time-series signals obtained from the strain sensors 163. Further, a distance sensor 161 is arranged at a position a predetermined distance away from the bed 162 as the sensor of the sensor device 10. For example, behavior of the person to be monitored can be detected from a time-series signal obtained from this distance sensor 161.

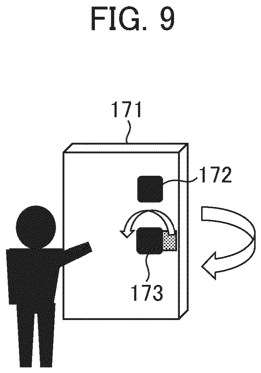

Figure 9 is an explanatory diagram illustrating an example where the sensor device 10 is attached to a door through which the person to be monitored moves between rooms. As is clear from Figure 9, a door 171 is configured to be able to be open and closed by a knob being pushed/pulled while being rotated, and acceleration sensors 172, 173 are attached to the door 171 and the knob. Whether the door is open or closed, an opening/closing speed, and the like, can be detected from a time-series signal obtained from this acceleration sensor 172. Note that a frequency of movement between rooms and action performed in the room, and the like, can be calculated through these.

While attachment examples of the sensor device 10 have been described above, all examples are merely illustrative, and the present invention is not limited to such configurations. Thus, to detect living conditions of the person to be monitored, any sensor may be used, and attachment portions can be modified in various manners.

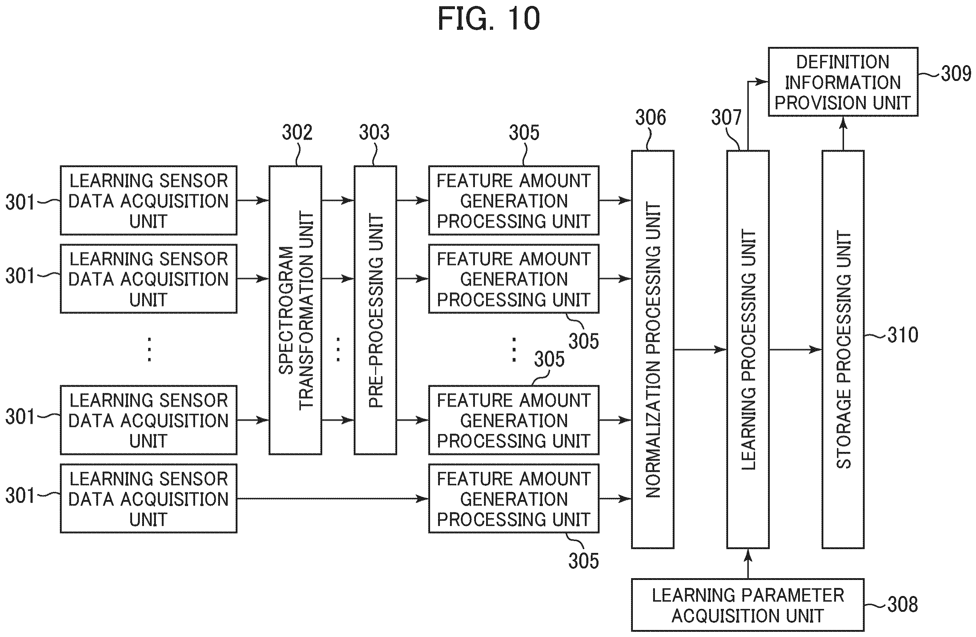

Figure 10 is a functional block diagram of the server device 30 when learning processing which will be described later is executed. As is clear from the drawing, the server device 30 includes a plurality of learning sensor data acquisition units 301 that read and acquire time-series sensor data detected at the sensor device 10 from the storage unit 31.

The time-series sensor data acquired at the learning sensor data acquisition units 301 is provided to a feature amount generation processing unit 305 after being transformed into a frequency domain or as is as data in a time domain in accordance with types of the sensors. In other words, part of the time-series data acquired at the learning sensor data acquisition unit 301 is provided to a spectrogram transformation unit 302 and transformed into a frequency domain, and the other part of the time-series data is provided to the feature amount generation processing unit 305 as is as a time-domain signal.

If the time-series sensor data is input, the spectrogram transformation unit 302 transforms the time-series sensor data into a spectrogram in a predetermined unit and outputs the spectrogram to a pre-processing unit 303. The pre-processing unit 303 performs predetermined pre-processing on a frequency-domain signal provided from the spectrogram transformation unit 302 and provides the pre-processed signal to the feature amount generation processing unit 305 for each sensor.

The feature amount generation processing unit 305 performs optimal feature amount generation processing for each sensor based on the frequency-domain signal or the time-domain signal. In the present embodiment, for example, an MFCC feature amount including a Mel-frequency cepstral coefficient, an output of a predetermined learned model generated through deep learning, and the like, can be employed as the feature amount of the frequency-domain signal. Further, for example, transient property (including a slope thereof, and the like), an output of a predetermined learned model generated through deep learning, and the like, can be employed as the feature amount of the time-domain signal. Note that a spectrogram may be employed as is as the frequency-domain signal.

An output of the feature amount generation processing unit 305, that is, each generated feature amount is provided to a normalization processing unit 306. The normalization processing unit 306 performs normalization by scoring, and the like, each feature amount. This makes it possible to deal with the respective feature amounts in the same feature amount space.

The feature amount generation processing unit 305 provides the feature amounts to a learning processing unit 307. Further, in this event, a learning parameter acquisition unit 308 provides various parameters necessary for learning to the learning processing unit 307.

The learning processing unit 307 performs learning processing based on the provided respective feature amounts and the parameters. This learning processing is, for example, processing of training a clustering model. While in the present embodiment, for example, a density-based spatial clustering of applications with noise (DBSCAN) is employed as a clustering algorithm, other clustering algorithms may be used. Further, other classification algorithms may be employed

The learned model generated at the learning processing unit 307 is provided to a definition information provision unit 309. The definition information provision unit 309 performs predetermined definition processing on the output in accordance with a predetermined algorithm or inputting of setting from a user. This definition processing is processing of defining correspondence between output nodes of the clustering model and activities of the sensors in accordance with output behavior.

A storage processing unit 310 performs processing of storing the learned model generated at the learning processing unit 307 and the definition information generated at the definition information provision unit 309 in the storage unit 31.

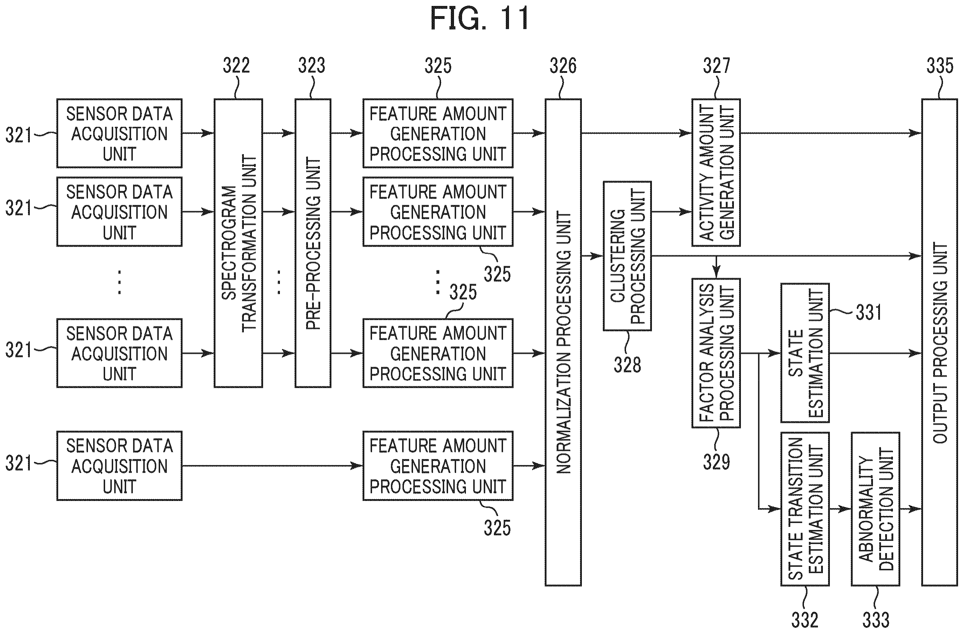

Figure 11 is a functional block diagram of the server device 30 when monitoring support operation is performed. As is clear from Figure 11, a configuration from a sensor data acquisition unit 321 to a normalization processing unit 326 (the sensor data acquisition unit 321, a spectrogram transformation unit 322, a pre-processing unit 323, a feature amount generation processing unit 325, the normalization processing unit 326) is substantially the same as a configuration related to the learning processing (the learning sensor data acquisition unit 301, the spectrogram transformation unit 302, the pre-processing unit 303, the feature amount generation processing unit 305, the normalization processing unit 306), and thus, detailed description will be omitted. Note that there is a difference in that while the learning sensor data is dealt with in a learning stage, sensor data that is newly acquired at the sensor device 10 and provided to the server device 30 is dealt with in the example of Figure 11.

The feature amounts normalized at the normalization processing unit 326 are provided to an activity amount generation unit 327. The activity amount generation unit 327 calculates an amount of activity (activity) for each sensor based on the provided feature amounts and provides the amount of activity to an output processing unit 335. The output processing unit 335 performs processing for presenting the amount of activity to the monitoring person. Note that the amount of activity may be calculated from a result of the clustering processing.

Further, the feature amounts normalized at the normalization processing unit 326 are also provided to a clustering processing unit 328. The clustering processing unit 328 performs processing of inputting the normalized feature amounts to the learned model generated through the learning processing and performing clustering. A result of this clustering processing is provided to the output processing unit 335. The output processing unit 335 performs processing for presenting the result of the clustering processing to the monitoring person.

The clustering result generated at the clustering processing unit 328 is provided to a factor analysis processing unit 329. The factor analysis processing unit 329 performs factor analysis processing for a predetermined factor based on the result of the clustering processing and calculates factor loadings, a factor score, an average value of factor scores, and the like, as a result of the factor analysis processing.

A state estimation unit 331 estimates a state of the person to be monitored based on the result of the factor analysis processing and outputs an estimation result to the output processing unit 335. The output processing unit 335 performs processing for presenting the provided information to the monitoring person.

Further, a state transition estimation unit 332 performs processing of estimating state transition of the person to be monitored based on the factor analysis result and provides the result to an abnormality detection unit 333. The abnormality detection unit 333 performs abnormality detection from a degree of the state transition and provides the result to the output processing unit 335. The output processing unit 335 performs processing for presenting information regarding the state transition and information regarding an abnormality to the monitoring person.

(1.2 Operation of Monitoring Support System)

Operation of the monitoring support system 100 will be described next. To cause the monitoring support system 100 to appropriately operate, the monitoring person or a person who introduces the monitoring support system 100 installs the sensor device 10 in the living space in advance and performs processing of associating the sensor device 10 with room arrangement in the living space on the monitoring support system 100. Further, the monitoring person performs learning processing in advance based on predetermined learning data.

(1.2.1 Installation of Sensors in Living Space and Pre-setting)

A person who performs setting such as the monitoring person first installs various sensor devices 10 in the living space of the person to be monitored in various aspects (see Figure 4 to Figure 9). This makes it possible to acquire behavior of the person to be monitored through sensors of the sensor devices 10.

Then, the person who performs setting performs setting regarding rooms and room arrangement of the living space via the information processing device 20, and the like, and performs processing of associating the installed sensor devices 10 with the rooms, specific locations, and the like, of the living space. A result of this processing is stored in the server device 30.

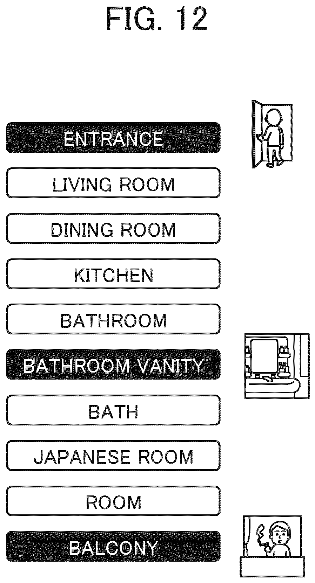

Figure 12 is an example of a screen to be displayed at the information processing device 20 when processing of associating the sensor devices 10 is performed. As is clear from the drawing, in a case where the sensor device 10 is set at an entrance door, the person who performs setting selects "entrance" on the screen to perform processing of associating identification information of the sensor device 10 attached to the entrance door. In a similar manner, in a case where the sensor device 10 is attached to a bathroom vanity, the person who performs setting selects "bathroom vanity" on the screen to associate identification information of the sensor device 10 attached to the bathroom vanity. Further, in a case where the sensor device 10 is attached to a balcony, the person who performs setting selects "balcony" on the screen to associate identification information of the sensor device 10 attached to the balcony.

Here, labels regarding predetermined states of the person to be monitored are provided to each room. It is assumed in the present embodiment that state labels are related to three states of hygiene, mobility and eating. Note that a state regarding sleeping may be taken into account in addition to these states.

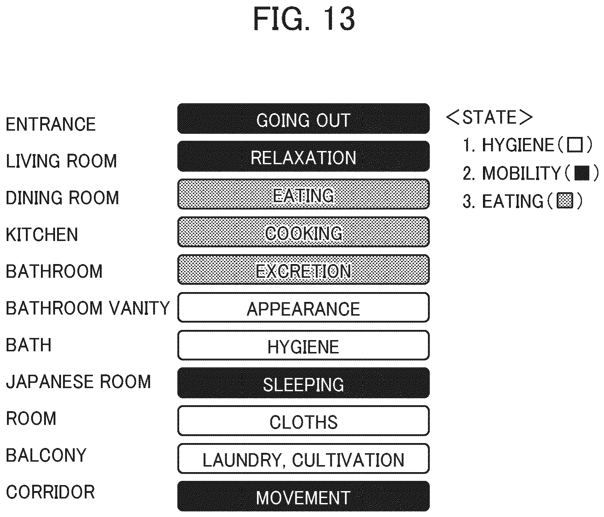

Figure 13 is an explanatory diagram indicating a relationship between rooms and states of the person to be monitored. As is clear from the drawing, "entrance", "living room", "Japanese room" and "corridor" are spaces mainly directed to "going out", "relaxation", "sleeping" and "movement", respectively, which are all related to mobility of human, and thus, a label representing a mobility state is provided to these rooms, and the like. In a similar manner, "dining room", "kitchen", and "bathroom" are spaces mainly directed to "eating", "cooking", and "excretion", respectively, which are all related to eating, and thus, a label representing an eating state is provided to these rooms, and the like. Further, "bathroom vanity", "bath (bath)", "room", and "balcony" are spaces directed to "appearance", "hygiene", "cloths", and "laundry, cultivation", respectively, which are all related to hygiene of human, and thus, a label representing a hygiene state is provided to these rooms, and the like.

In this manner, as a result of labels related to states of the person to be monitored being provided to the respective rooms, and the like, a state of the person to be monitored can be inferred via the labels from behavior of the sensors arranged at the respective rooms. Note that presentation processing will be described in detail later.

(1.2.2 Learning Processing)

Pre-learning processing of the clustering model to be used in the monitoring support system 100 will be described next.

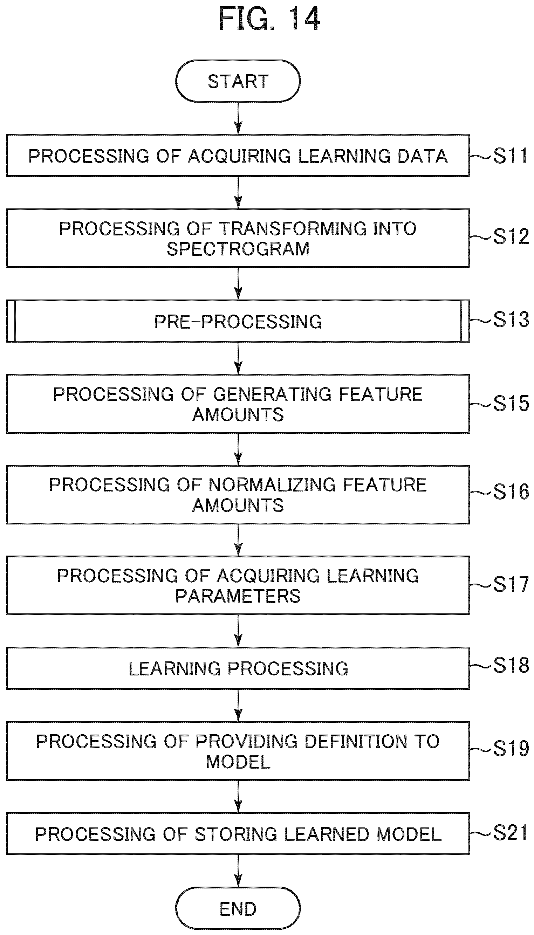

Figure 14 is a general flowchart regarding learning processing to be performed at the server device 30. As is clear from the drawing, when the processing starts, the learning sensor data acquisition unit 301 performs processing of reading and acquiring time-series learning sensor data from the storage unit 31 (S11). The time-series learning sensor data may be past data acquired at each sensor.

After the acquisition processing, the spectrogram transformation unit 302 performs processing of transforming part of the learning sensor data into a spectrogram (S12). By this means, part of the time-series sensor data is transformed into a frequency domain.

After the spectrogram transformation processing, the pre-processing unit 303 performs predetermined pre-processing on the signal subjected to the transformation processing into the spectrogram (S13).

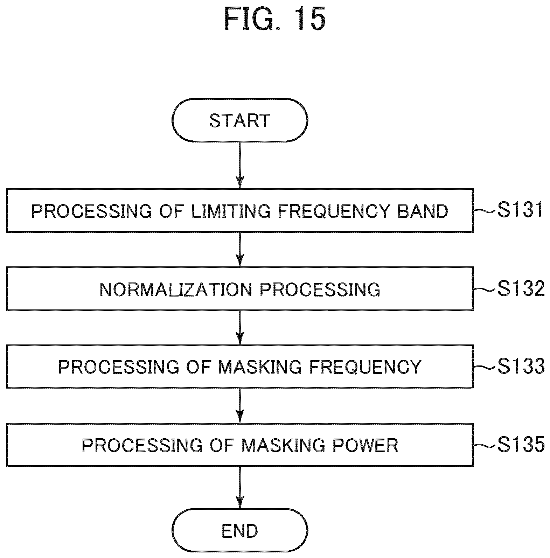

Figure 15 is a detailed flowchart (No. 1) of the pre-processing. As is clear from the drawing, when the processing starts, the pre-processing unit 303 performs processing of limiting a frequency band to a predetermined range on the spectrogram (S131). Then, the pre-processing unit 303 performs processing of normalizing the spectrogram in a predetermined frequency band (S132). The pre-processing unit 303 performs processing of masking a predetermined frequency and power of the spectrogram subjected to the normalization processing (S133, S135). Then, the pre-processing ends.

As a result of such pre-processing being performed, only a frequency-domain signal in an assumed range can be provided to feature amount generation processing which will be described later.

Returning to Figure 14, after the pre-processing, the feature amount generation processing unit 305 performs processing of generating an optimal feature amount for each sensor based on the pre-processed frequency-domain signal and time-domain sensor data (S15). Various targets can be employed as the feature amount. For example, an MFCC feature amount including a Mel-frequency cepstral coefficient may be used as the feature amount if the signal is an audio signal acquired from a microphone. Further, a prediction result of the learned model generated through deep learning may be used as the feature amount. Still further, a slope, and the like, of transient property may be used as the feature amount if the signal is a time-domain signal.

After the feature amount generation processing, the normalization processing unit 306 performs normalization processing by scoring, and the like, the respective feature amounts (S16). This makes it possible to deal with the respective feature amounts in the same feature amount space.

After the normalization processing of the feature amounts, the learning parameter acquisition unit 308 performs processing of acquiring parameters required for learning from the storage unit 31 (S17).

After the parameters are acquired, the learning processing unit 307 performs learning processing of training a predetermined model using a predetermined algorithm based on the normalized feature amounts and the parameters (S18).

This learning processing may be, for example, processing of training the clustering model. While in the present embodiment, density-based spatial clustering of applications with noise (DBSCAN) is employed as the clustering algorithm, other clustering algorithms may be used. Further, other classification algorithms may be employed. Note that it is also possible to employ a configuration where learning processing is performed a plurality of times while initial parameters are changed, and an optimal learned model is set as the final learned model.

After the learning processing, the definition information provision unit 309 performs processing of providing predetermined definition to the learned model (S19). The definition information provision unit 309 may provide the definition information in accordance with an input from the person who performs setting or may automatically provide the definition information based on a predetermined condition. Here, in the present embodiment, the definition information is information that defines correspondence between output nodes of the clustering model and activities of the sensors.

After the definition processing, the storage processing unit 310 performs processing of storing the learned model in the storage unit 31 (S21), and the learning processing ends.

Note that in a case where there are a plurality of learning data sets, the above-described learning processing may be repeated.

(1.2.3 Operation of Monitoring Support System)

Operation of the monitoring support system 100 will be described next.

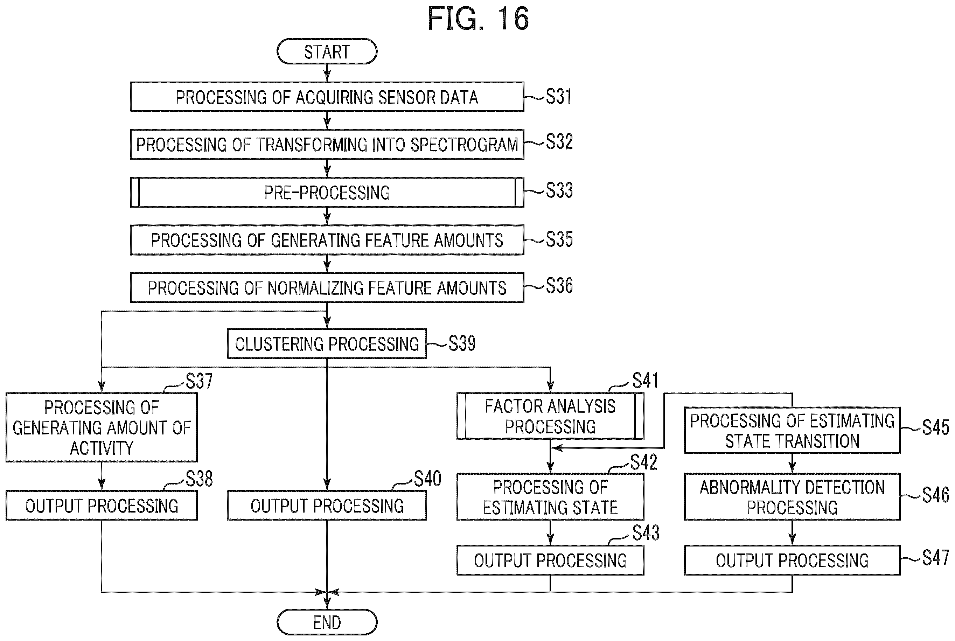

Figure 16 is a general flowchart regarding operation of the server device 30 when monitoring processing is performed. As is clear from the drawing, when the processing starts, the sensor data acquisition unit 321 performs processing of acquiring sensor data detected at the sensor device 10 and stored in the storage unit 31 (S31).

After the processing of acquiring the sensor data, the spectrogram transformation unit 322 performs processing of transforming part of the sensor data into a spectrogram (S32). By this means, part of time-series sensor data is transformed into a frequency domain.

According to such a configuration, it is possible to transform sensor detection information into feature amounts in a time domain or in a frequency domain, so that it is possible to perform multilateral analysis.

After the processing of transforming into the spectrogram, the pre-processing unit 323 performs predetermined pre-processing on the signals subjected to the processing of transforming into the spectrogram (S33).

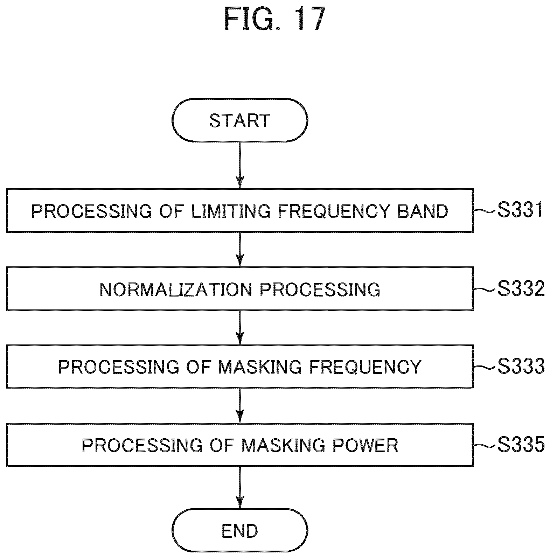

Figure 17 is a detailed flowchart (No. 2) of the pre-processing. As is clear from the drawing, when the processing starts, the pre-processing unit 323 performs processing of limiting a frequency band to a predetermined range on the spectrogram (S331). Then, the pre-processing unit 323 performs processing of normalizing the spectrogram in a predetermined frequency band (S332). The pre-processing unit 323 performs processing of masking the predetermined frequency and power of the spectrogram subjected to the normalization processing (S333, S335). Then, the pre-processing ends.

As a result of such pre-processing being performed, only a frequency-domain signal in an assumed range can be provided to the feature amount generation processing which will be described later.

Returning to Figure 16, after the pre-processing, the feature amount generation processing unit 325 performs processing of generating an optimal feature amount for each sensor based on the pre-processed frequency-domain signal and time-domain sensor data (S35). Various targets can be employed as the feature amount. For example, an MFCC feature amount including a Mel-frequency cepstral coefficient may be used as the feature amount if the signal is an audio signal acquired from a microphone. Further, a prediction result of the learned model generated through deep learning may be used as the feature amount. Still further, a slope, and the like, of transient property may be used as the feature amount if the signal is a time-domain signal.

After the feature amount generation processing, the normalization processing unit 326 performs normalization processing by scoring, and the like, the respective feature amounts (S36). This makes it possible to deal with the respective feature amounts in the same feature amount space.

After the normalization processing of the feature amounts, the feature amounts subjected to the normalization processing are provided to the activity amount generation unit 327 and the clustering processing unit 328.

The activity amount generation unit 327 performs processing of generating an amount of activity of each sensor device 10 based on the normalized feature amounts (S37). The amount of activity (or activity) is an index indicating how frequently information is detected at each sensor, and is in the present embodiment, for example, an occurrence frequency, or the like, of the normalized feature amount per unit time.

After the processing of generating the amount of activity, the output processing unit 335 performs processing of outputting the amount of activity regarding each sensor (S38). Here, the output processing is processing of presenting information to the monitoring person and is, for example, processing of transmitting information to be presented at a display connected to the information processing device 20, to the information processing device 20. After this processing, the processing ends.

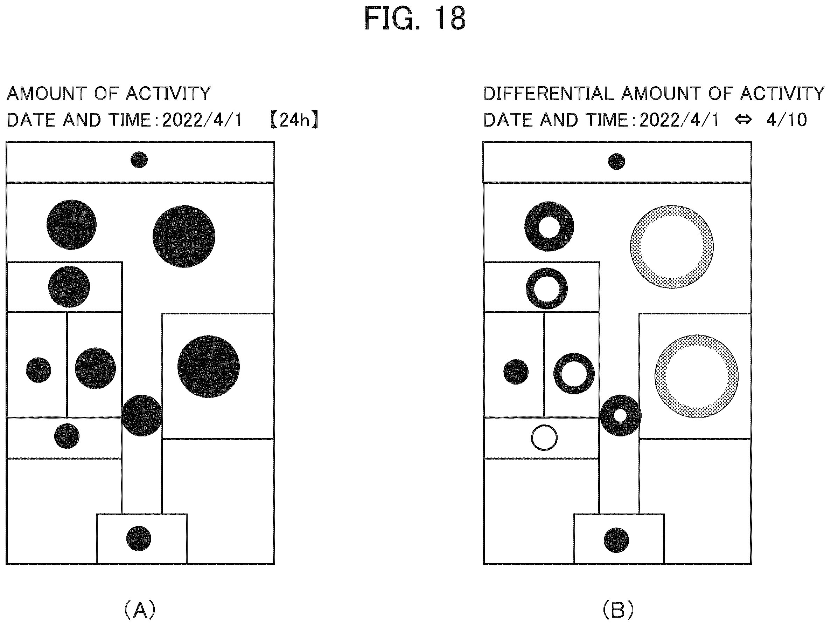

Figure 18 is an explanatory diagram illustrating a display example of the amount of activity on the display. (A) of Figure 18 is a basic display example, and (B) of Figure 18 is a display example based on a further additional function.

In (A) of Figure 18, amounts of activity of the sensors in respective rooms or at the sensor devices 10 on April 1, 2022 are expressed with sizes of diameters of circles arranged for the respective rooms or the sensor devices 10. As is clear from Figure 18, an image displayed at the display of the information processing device 20 includes a plan view (or room arrangement) of the living space of the person to be monitored, in which the sensor devices 10 are arranged. As described above, the respective sensor devices 10 are associated with the respective rooms by pre-setting. Thus, the amounts of activity of the sensors in the respective rooms are expressed with circles, and a state of the person to be monitored can be grasped through this.

According to such a configuration, the state of the person to be monitored can be estimated by the amounts of activity of the sensors being presented so as to correspond to room arrangement of the living space.

Note that the method for presenting the amounts of activity is not limited to such an aspect. Thus, the amounts of activity can be presented in various aspects. For example, a relative relationship with the amounts of activity of the sensors in other time intervals may be displayed by presenting differences between the amounts of activity of the sensors on certain date and the amounts of activity of the sensors on other dates.

(B) of Figure 18 is an explanatory diagram illustrating a display example of the relative relationship of the amounts of activity of the sensors. In the example of Figure 18, circles representing the amounts of activity of the sensors on April 1, 2022 and circles representing the amounts of activity of the sensors on April 10, 2022 are drawn on a plan view in a superimposed manner.

According to such a configuration, a change of the amounts of activity can be immediately grasped from the differences, or the like, of the diameters of the circles at the respective rooms, so that it is possible to more accurately grasp the state of the person to be monitored.

Further, the amounts of activity do not necessarily have to be displayed along with the room arrangement of the rooms. For example, the amounts of activity can be displayed in other various manners.

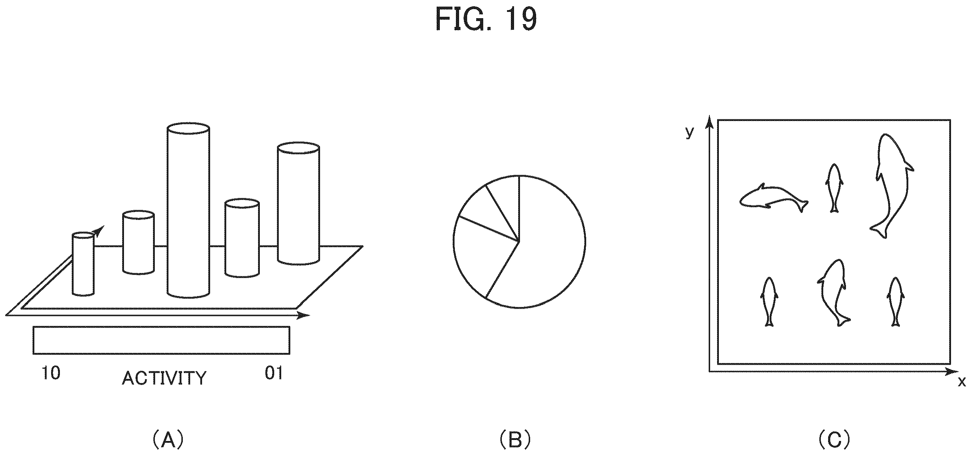

Figure 19 is an explanatory diagram illustrating another display example regarding the amounts of activity of the sensors. (A) of Figure 19 is an example where the amounts of activity of the sensors at the respective sensor devices 10 are displayed with a colored three-dimensional bar chart, (B) of Figure 19 is an example where the amounts of activity of the sensors at the respective sensor devices 10 are displayed with a colored circle chart, and (C) of Figure 19 is an example where the amounts of activity of the sensors at the respective sensor devices 10 are displayed using sizes, positions and color of illustration in a fish shape. According to (A) of Figure 19, it is possible to stereoscopically grasp the amounts of activity of the sensors in the respective rooms or at the sensor devices 10. According to (B) of Figure 19, it is possible to grasp a relative relationship of the amounts of activity of the sensors in the respective rooms or at the sensor devices 10. According to (C) of Figure 19, it is possible to grasp the amounts of activity of the sensors in the respective rooms or at the sensor devices 10 in an entertaining way.

Returning to Figure 16, the clustering processing unit 328 performs processing of clustering the normalized feature amounts using the learned model generated through learning processing (S39). A clustering algorithm is DBSCAN in the present embodiment. Note that the clustering model is subjected to definition processing as described above. Thus, which sensor device 10 detects information can be accurately grasped from a result of the clustering processing.

According to such a configuration, it is possible to reduce influence of noise, and the like, due to the sensors, an environment, and the like, through clustering.

After the clustering processing, the output processing unit 335 performs processing of outputting a result of the clustering processing (S40). Here, the output processing is processing of presenting information to the monitoring person and is, for example, processing of transmitting information to be presented at a display connected to the information processing device 20, to the information processing device 20. After this processing, the processing ends.

Note that activity amount generation processing may be performed on the result of the clustering processing. In other words, an occurrence frequency, and the like, per unit time may be calculated for each output corresponding to the result of the clustering processing.

Returning to the point after the clustering processing, the factor analysis processing unit 329 performs factor analysis processing on the results of the clustering processing (S41).

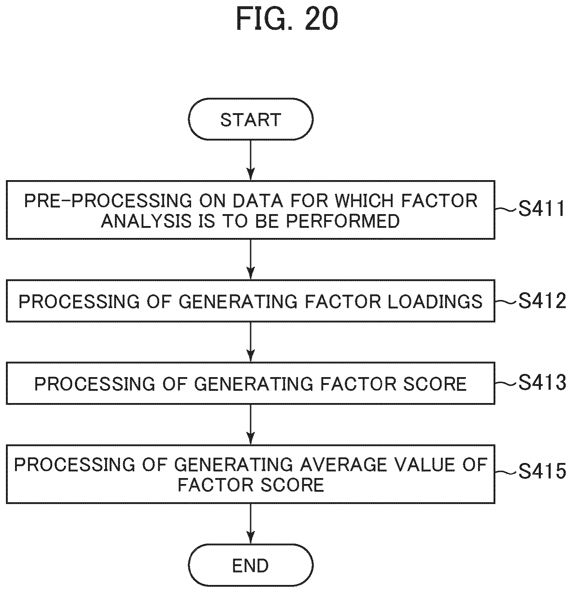

Figure 20 is a detailed flowchart of the factor analysis processing. As is clear from the drawing, when the processing starts, the factor analysis processing unit 329 executes pre-processing on data to be used for factor analysis, that is, the results of the clustering processing of the normalized feature amounts (S411). The pre-processing is, in the present embodiment, processing of classifying the results of the clustering processing, for example, outputs of the respective output nodes into a plurality of stages in view of a detection frequency, or the like, per unit time to obtain discrete values. The plurality of stages may be, for example, seven stages.

After the pre-processing, the factor analysis processing unit 329 performs processing of generating factor loadings between the pre-processed results of the clustering processing and a predetermined factor (S412). Here, in the present embodiment, the factors include a mobility factor that is a factor regarding mobility of the person to be monitored, an eating factor that is a factor regarding eating of the person to be monitored, and a hygiene factor that is a factor regarding hygiene of the person to be monitored.

According to such a configuration, it is possible to evaluate the state of the person to be monitored in view of hygiene, mobility and eating. This makes it possible to appropriate evaluate states of elderly people, and the like.

Note that the factors are not limited to such three factors and may further include a sleeping factor that is a factor regarding sleeping.

After the factor loadings are generated, the factor analysis processing unit 329 performs processing of generating factor scores based on the factor loadings (S413). Further, after the processing of generating the factor scores, the factor analysis processing unit 329 performs processing of calculating an average value of the factor scores in a predetermined time interval (S415). The predetermined time interval is, for example, one day. After the processing of generating the average value, the factor analysis processing ends.

Returning to Figure 16, after the factor analysis processing, the state estimation unit 331 performs processing of estimating the state of the person to be monitored based on the factor analysis result. In the present embodiment, the state is estimated by generating a health state (Ha) using the generated average factor scores of the factors and the following evaluation formula. Note that in the present embodiment, a word, estimation can be replaced with other words such as prediction.

[Formula 1]

$$Ha = \alpha(hygiene) * \beta(mobility) * \gamma(eating) + C$$

Here, $\alpha$, $\beta$, $\gamma$ are predetermined coefficients, (hygiene) represents an average factor score of the hygiene factor, (mobility) represents an average factor score of the mobility factor, and (eating) represents an average factor score of the eating factor. C is a predetermined constant.

Note that the evaluation formula is not limited to such a form. Thus, for example, the evaluation formula may be set as follows using a natural logarithm e.

[Formula 2]

$$Ha = \alpha e^{(hygiene)} * \beta e^{(mobility)} * \gamma e^{(eating)} + C$$

Note that the health state can be generated using a similar method also in a case where there are four factors. In other words, in a case where there are four factors including a sleeping factor, the health state (H) can be evaluated using the following evaluation formula.

$$H = \alpha(hygiene) * \beta(mobility) * y(eating) * \delta(sleeping) + C \qquad \text{[Formula 3]}$$

However, $\delta$ is a predetermined coefficient, and (sleeping) is an average factor score of the sleeping factor.

Note that also in this case, the evaluation formula can be set as follows using the natural logarithm e in a similar manner.

[Formula 4]

$$H = \alpha e^{(hygiene)} * \beta e^{(mobility)} * \gamma e^{(eating)} ** \delta e^{(sleeping)} + C$$

According to such a configuration, the health state can be estimated based on the factors behind the feature amounts obtained from time-series sensor signals.

After the state estimation processing, the output processing unit 335 performs processing of outputting the generated health state (S43). Here, the output processing is processing of presenting information to the monitoring person and is, for example, processing of transmitting information to be presented at a display connected to the information processing device 20, to the information processing device 20. After this processing, the processing ends.

After the factor analysis processing, the state transition estimation unit 332 performs processing of estimating state transition in a time direction based on a result of the factor analysis processing (S45). More specifically, the state transition estimation unit 332 estimates the state transition by specifying tendency from a combination of transition of predetermined factors, that is, a combination of transition of the mobility factor and transition of the hygiene factor, a combination of transition of the eating factor and transition of the mobility factor, and a combination of transition of hygiene factor and transition of the eating factor. Note that in the present embodiment, a combination of the mobility factor and the hygiene factor will be referred to as buoyancy, a combination of the eating factor and the mobility factor will be referred to as activeness, and a combination of the hygiene factor and the eating factor will be referred to as cognitive ability.

According to such a configuration, it is possible to generate prediction information through multidimensional evaluation. Further, the state of the person to be monitored can be evaluated in view of hygiene, mobility and eating, so that it is possible to appropriately evaluate the states of elderly people, and the like.

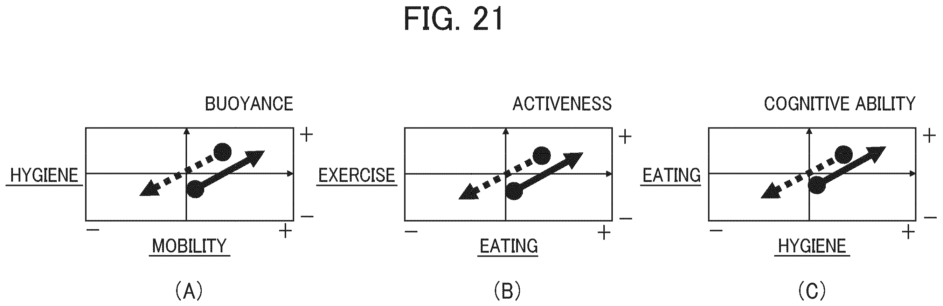

Figure 21 is an explanatory diagram regarding combinations of factor transition. (A) of Figure 21 is a conceptual diagram regarding buoyancy, (B) of Figure 21 is a conceptual diagram regarding activeness, and (C) of Figure 21 is a conceptual diagram regarding cognitive ability.

As is clear from (A) of Figure 21, tendency regarding buoyancy can be grasped by evaluating an average factor score regarding mobility and hygiene in chronological order. Future state transition can be estimated from tendency of this vector. For example, in a case where it is determined that both the factor regarding mobility and the factor regarding hygiene are improving, tendency that buoyancy will improve in the future is specified.

As is clear from (B) of Figure 21, tendency regarding activeness can be grasped by evaluating an average factor score regarding eating and mobility in chronological order. Future transition state can be estimated from tendency of this vector. For example, in a case where it is determined that both the factor regarding eating and the factor regarding mobility are improving, tendency that activeness will improve in the future is specified.

As is clear from (C) of Figure 21, tendency regarding cognitive ability can be grasped by evaluating an average factor score regarding hygiene and eating in chronological order. Future state transition can be estimated from tendency of this vector. For example, in a case where it is determined that both the factor regarding hygiene and the factor regarding eating are improving, tendency that cognitive ability will improve in the future is specified.

Note that while in the present embodiment, description has been provided assuming that state transition is predicted by combining transition of two factors, the present invention is not limited to such a configuration. Thus, the state transition may be predicted from transition of one factor, or the state transition may be predicted by combining three or more factors.

Returning to Figure 16, after the state transition estimation processing, the abnormality detection unit 333 performs abnormality detection processing in accordance with whether or not a degree of a change of each factor exceeds a predetermined threshold (S46). For example, an abnormality may be detected in accordance with whether or not a magnitude of a vector representing transition of the average factor score exceeds a predetermined threshold in Figure 21. Note that various methods can be used for a determination method of detection. In short, it is only necessary to grasp a degree of a change of the transition vector, and thus, an abnormality may be detected from a difference, a slope, and the like, of the vector, or an abnormality may be detected by comprehensively determining these characteristics. Further, it may be determined that there is an abnormality in a case where an abnormality is detected in any one of buoyancy, activeness and cognitive ability, or it may be determined that there is an abnormality in a case where abnormalities are detected in two or more out of the three elements.

After the abnormality detection processing, the output processing unit 335 performs processing of outputting estimation of the state transition and whether or not there is an abnormality (S47). Here, the output processing is processing of presenting information to the monitoring person and is, for example, processing of transmitting information to be presented at a display coupled to the information processing device 20, to the information processing device 20. After this processing, the processing ends.

According to the configuration described above, it is possible to generate prediction information regarding state transition of the person to be monitored from a change of factors behind the feature amounts obtained from the time-series sensor information detected at the sensors provided in the living space of the person to be monitored. The monitoring person can make a certain forecast for the state of the person to be monitored based on this prediction information, so that monitoring burden is reduced.

(2. Modification)

The present invention can be implemented while being modified in various manners.

While in the above-described embodiment, a configuration has been described where the state of the person to be monitored or the prediction information of the state transition is provided to the monitoring person, the present invention is not limited to such a configuration. Thus, the monitoring support system 100 may further include predetermined presentation means provided in the living space of the person to be monitored and may present various kinds of information, for example, information that provides awareness regarding a state of the person to be monitored himself/-herself or information that encourages improvement of the state, to the person to be monitored through this presentation means.

More specifically, after the server device 30 generates the above-described state or the prediction information of the state transition, it is also possible to generate information for providing awareness regarding the state or information that encourages improvement of the state, transmit these kinds of information to the presentation means and present the information to the person to be monitored through the presentation means.

The presentation means is means that is provided in the living space of the person to be monitored for providing a predetermined stimulus to five senses of the person to be monitored and is, for example, a speaker (auditory stimulus), a display (visual stimulus), a light source such as an LED (visual stimulus), a vibration unit (haptic stimulus), and the like. Note that the presentation means may be provided integrally with the sensor device 10. The information for providing awareness regarding the state is, for example, information such as sound (or functional sound) indicating a current state of the person to be monitored, an image (or a moving image), a light emission pattern, and a vibration pattern. The information that encourages improvement of the state is, for example, information that encourages improvement of the state or a symptom of the person to be monitored and is, for example, sound (or functional sound), an image (or a moving image), a light emission pattern, a vibration pattern, or the like, that restores time sense or encourages awareness regarding time in a case where the time sense is lost.

While in the above-described embodiment, description has been provided assuming that various kinds of information are finally presented to the monitoring person through the display coupled to the information processing device 20, the present invention is not limited to such a configuration. The information may be presented through means for presenting information to other senses of five senses instead of being visually presented, for example, through sound and vibration using a device such as a speaker and a vibration device provided at the information processing device 20.

While in the above-described embodiment, description has been provided assuming that a result of abnormality detection is presented to only the monitoring person in a case where abnormality detection is performed, it is also possible to employ a configuration where an external device such as a server at a medical institution, or the like, may be directly or indirectly notified of the result of abnormality detection.

While the embodiments of the present invention have been described above, the above-described embodiments merely indicate part of application examples of the present invention, and are not intended to limit the technical scope of the present invention to specific configurations of the above-described embodiments. Further, the above-described embodiments can be combined as appropriate within a range not causing inconsistency.

Industrial Applicability

The present invention can be utilized in industries that manufacture and use a network system, and the like.

Reference Signs List

10      Sensor device
20      Information processing device
30      Server device
100    Monitoring support system

**Claims**

**1.**   A monitoring support system comprising:

a sensor information acquisition unit that acquires time-series sensor information detected at one or more sensors provided in a living space of a person to be monitored;
a feature amount generation unit that generates a feature amount based on the time-series sensor information;

a factor analysis unit that performs factor analysis based on the feature amount using a predetermined factor;
a temporal change specification unit that specifies a temporal change of the factor based on a result of the factor analysis; and
a prediction information generation unit that generates prediction information regarding state transition of the person to be monitored based on the temporal change.

2. The monitoring support system according to claim 1, wherein the feature amount includes a time-domain feature amount and a frequency-domain feature amount.

3. The monitoring support system according to claim 1, wherein the factor analysis unit performs clustering processing on the normalized feature amount and performs factor analysis on a result of the clustering processing.

4. The monitoring support system according to claim 1, wherein the factor includes a hygiene factor that is a factor regarding hygiene of the person to be monitored, a mobility factor that is a factor regarding mobility of the person to be monitored, and an eating factor that is a factor regarding eating of the person to be monitored.

5. The monitoring support system according to claim 4, wherein the factor further includes a sleeping factor that is a factor regarding sleeping of the person to be monitored.

6. The monitoring support system according to claim 1, wherein the factor analysis includes processing of calculating a factor score and then calculating an average value of the factor score in a time direction.

7. The monitoring support system according to claim 6, wherein the temporal change specification unit specifies a temporal change of the average value.

8. The monitoring support system according to claim 1, wherein the prediction information generation unit generates the prediction information based on a combination of temporal changes of a plurality of the factors.

9. The monitoring support system according to claim 8, wherein the combination includes a combination a hygiene factor that is a factor regarding hygiene of the person to be monitored and a mobility factor that is a factor regarding mobility of the person to be monitored, a combination of the mobility factor and an eating factor that is a factor regarding eating of the person to be monitored, and a combination of the eating factor and the hygiene factor.

10. The monitoring support system according to claim 1, further comprising:
an abnormality detection unit that performs abnormality detection based on the temporal change of the factor.

11. The monitoring support system according to claim 1, further comprising:
a state estimation unit that estimates a health state of the person to be monitored based on the factor.

12. The monitoring support system according to claim 1, further comprising:
a sensor information presentation unit that calculates an information detection frequency of each of the sensors based on the feature amount and presents the information detection frequency in association with room arrangement of the living space corresponding to each of the sensors.

13. A monitoring support device comprising:

a sensor information acquisition unit that acquires time-series sensor information detected at one or more sensors provided in a living space of a person to be monitored;
a feature amount generation unit that generates a feature amount based on the time-series sensor information;
a factor analysis unit that performs factor analysis based on the feature amount using a predetermined factor;
a temporal change specification unit that specifies a temporal change of the factor based on a result of the factor analysis; and
a prediction information generation unit that generates prediction information regarding state transition of the person to be monitored based on the temporal change.

14. A monitoring support method comprising:

a sensor information acquisition step of acquiring time-series sensor information detected at one or more sensors provided in a living space of a person to be monitored;

a feature amount generation step of generating a feature amount based on the time-series sensor information;

a factor analysis step of performing factor analysis based on the feature amount using a predetermined factor;

a temporal change specification step of specifying a temporal change of the factor based on a result of the factor analysis; and

a prediction information generation step of generating prediction information regarding state transition of the person to be monitored based on the temporal change.

15. A monitoring support program comprising:

a sensor information acquisition step of acquiring time-series sensor information detected at one or more sensors provided in a living space of a person to be monitored;

a feature amount generation step of generating a feature amount based on the time-series sensor information;

a factor analysis step of performing factor analysis based on the feature amount using a predetermined factor;

a temporal change specification step of specifying a temporal change of the factor based on a result of the factor analysis; and

a prediction information generation step of generating prediction information regarding state transition of the person to be monitored based on the temporal change.

# FIG. 1

100

| 10-1 | 10-2 | 10-N |
|---|---|---|
| SENSOR DEVICE 1 | SENSOR DEVICE 2 | SENSOR DEVICE N |

. . .

INFORMATION PROCESSING DEVICE

20

SERVER DEVICE

30

# FIG. 2

20

21    22    23

| STORAGE UNIT | CONTROL UNIT | COMMUNICATION UNIT |

| OPERATION INPUT UNIT | AUDIO OUTPUT UNIT | DISPLAY OUTPUT UNIT | I/O UNIT |

25    26    27    28

# FIG. 3

30

31 32 33

| STORAGE UNIT | CONTROL UNIT | COMMUNICATION UNIT |

| OPERATION INPUT UNIT | AUDIO OUTPUT UNIT | DISPLAY OUTPUT UNIT | I/O UNIT |

35 36 37 38

FIG. 4

(A)

(B)

m/s²   t    m/s²   t

11   111

113

(C)

11   110   113

# FIG. 5

121(L)

121(R)

122

(A)

Pa

BREATH SOUND

t

Pa

COUGH

t

(B)

EP 4 693 248 A1

FIG. 6

(A)

(B)

EP 4 693 248 A1

# FIG. 7

(A)          (B)          (C)

FIG. 8

# FIG. 9

# FIG. 10

EP 4 693 248 A1

# FIG. 11

EP 4 693 248 A1

# FIG. 12

ENTRANCE

LIVING ROOM

DINING ROOM

KITCHEN

BATHROOM

BATHROOM VANITY

BATH

JAPANESE ROOM

ROOM

BALCONY

# FIG. 13

| | | |
|---|---|---|
| ENTRANCE | GOING OUT | |
| LIVING ROOM | RELAXATION | |
| DINING ROOM | EATING | |
| KITCHEN | COOKING | |
| BATHROOM | EXCRETION | |
| BATHROOM VANITY | APPEARANCE | |
| BATH | HYGIENE | |
| JAPANESE ROOM | SLEEPING | |
| ROOM | CLOTHS | |
| BALCONY | LAUNDRY, CULTIVATION | |
| CORRIDOR | MOVEMENT | |

\<STATE\>
1. HYGIENE(□)
2. MOBILITY(■)
3. EATING(▨)

# FIG. 14

START

↓

PROCESSING OF ACQUIRING LEARNING DATA ~S11

↓

PROCESSING OF TRANSFORMING INTO SPECTROGRAM ~S12

↓

PRE-PROCESSING ~S13

↓

PROCESSING OF GENERATING FEATURE AMOUNTS ~S15

↓

PROCESSING OF NORMALIZING FEATURE AMOUNTS ~S16

↓

PROCESSING OF ACQUIRING LEARNING PARAMETERS ~S17

↓

LEARNING PROCESSING ~S18

↓

PROCESSING OF PROVIDING DEFINITION TO MODEL ~S19

↓

PROCESSING OF STORING LEARNED MODEL ~S21

↓

END

# FIG. 15

```
        ┌─────────────┐
        │    START    │
        └─────────────┘
               │
               ▼
┌───────────────────────────────────────────┐
│  PROCESSING OF LIMITING FREQUENCY BAND     │─── S131
└───────────────────────────────────────────┘
               │
               ▼
┌───────────────────────────────────────────┐
│          NORMALIZATION PROCESSING          │─── S132
└───────────────────────────────────────────┘
               │
               ▼
┌───────────────────────────────────────────┐
│       PROCESSING OF MASKING FREQUENCY      │─── S133
└───────────────────────────────────────────┘
               │
               ▼
┌───────────────────────────────────────────┐
│        PROCESSING OF MASKING POWER         │─── S135
└───────────────────────────────────────────┘
               │
               ▼
        ┌─────────────┐
        │     END     │
        └─────────────┘
```

## FIG. 16

START

PROCESSING OF ACQUIRING SENSOR DATA — S31

PROCESSING OF TRANSFORMING INTO SPECTROGRAM — S32

PRE-PROCESSING — S33

PROCESSING OF GENERATING FEATURE AMOUNTS — S35

PROCESSING OF NORMALIZING FEATURE AMOUNTS — S36

CLUSTERING PROCESSING — S39

PROCESSING OF GENERATING AMOUNT OF ACTIVITY — S37

FACTOR ANALYSIS PROCESSING — S41

PROCESSING OF ESTIMATING STATE TRANSITION — S45

OUTPUT PROCESSING — S38

OUTPUT PROCESSING — S40

PROCESSING OF ESTIMATING STATE — S42

ABNORMALITY DETECTION PROCESSING — S46

OUTPUT PROCESSING — S43

OUTPUT PROCESSING — S47

END

# FIG. 17

```
        ┌─────────────┐
        │    START    │
        └─────────────┘
               │
               ▼
┌──────────────────────────────────────┐
│ PROCESSING OF LIMITING FREQUENCY BAND │──S331
└──────────────────────────────────────┘
               │
               ▼
┌──────────────────────────────────────┐
│       NORMALIZATION PROCESSING        │──S332
└──────────────────────────────────────┘
               │
               ▼
┌──────────────────────────────────────┐
│   PROCESSING OF MASKING FREQUENCY     │──S333
└──────────────────────────────────────┘
               │
               ▼
┌──────────────────────────────────────┐
│     PROCESSING OF MASKING POWER       │──S335
└──────────────────────────────────────┘
               │
               ▼
        ┌─────────────┐
        │     END     │
        └─────────────┘
```

# FIG. 18

AMOUNT OF ACTIVITY
DATE AND TIME:2022/4/1 【24h】

DIFFERENTIAL AMOUNT OF ACTIVITY
DATE AND TIME:2022/4/1 ⇔ 4/10

(A)

(B)

EP 4 693 248 A1

# FIG. 19

ACTIVITY

10                    01

(A)

(B)

(C)

EP 4 693 248 A1

# FIG. 20

```
                    ┌─────────────┐
                    │    START    │
                    └──────┬──────┘
                           │
                           ▼
   ┌──────────────────────────────────────────────┐
   │  PRE-PROCESSING ON DATA FOR WHICH FACTOR      │  ~S411
   │       ANALYSIS IS TO BE PERFORMED             │
   └──────────────────────┬───────────────────────┘
                           │
                           ▼
   ┌──────────────────────────────────────────────┐
   │  PROCESSING OF GENERATING FACTOR LOADINGS     │  ~S412
   └──────────────────────┬───────────────────────┘
                           │
                           ▼
   ┌──────────────────────────────────────────────┐
   │   PROCESSING OF GENERATING FACTOR SCORE       │  ~S413
   └──────────────────────┬───────────────────────┘
                           │
                           ▼
   ┌──────────────────────────────────────────────┐
   │ PROCESSING OF GENERATING AVERAGE VALUE OF     │  ~S415
   │              FACTOR SCORE                     │
   └──────────────────────┬───────────────────────┘
                           │
                           ▼
                    ┌─────────────┐
                    │     END     │
                    └─────────────┘
```

# FIG. 21

BUOYANCE

HYGIENE

MOBILITY

(A)

ACTIVENESS

EXERCISE

EATING

(B)

COGNITIVE ABILITY

EATING

HYGIENE

(C)

## INTERNATIONAL SEARCH REPORT

| International application No. |
|---|
| **PCT/JP2023/013218** |

**A. CLASSIFICATION OF SUBJECT MATTER**

*G08B 25/04*(2006.01)i; *G08B 21/02*(2006.01)i
FI: G08B25/04 K; G08B21/02

According to International Patent Classification (IPC) or to both national classification and IPC

**B. FIELDS SEARCHED**

Minimum documentation searched (classification system followed by classification symbols)

G08B21/00-25/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2017-167878 A (NATIONAL INSTITUTE OF ADVANCED INDUSTRIAL SCIENCE AND TECHNOLOGY) 21 September 2017 (2017-09-21) paragraphs [0030]-[0042], [0067]-[0099], fig. 1 | 1, 4-5, 8-15 |
| X | JP 2011-237865 A (ADVANCED TELECOMMUNICATION RESEARCH INSTITUTE INTERNATIONAL) 24 November 2011 (2011-11-24) paragraphs [0025]-[0039], [0045]-[0050] | 1-2, 4-11, 13-15 |
| X | JP 2003-256957 A (MATSUSHITA ELECTRIC INDUSTRIAL CO., LTD.) 12 September 2003 (2003-09-12) paragraphs [0016]-[0070], fig. 3-5 | 1, 3-11, 13-15 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **02 June 2023** | **13 June 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/013218**

| Patent document cited in search report | | | Publication date (day/month/year) | Patent family member(s) | Publication date (day/month/year) |
|---|---|---|---|---|---|
| JP | 2017-167878 | A | 21 September 2017 | (Family: none) | |
| JP | 2011-237865 | A | 24 November 2011 | (Family: none) | |
| JP | 2003-256957 | A | 12 September 2003 | US 2003/0117279 A1 paragraphs [0070]-[0180], fig. 3-5 EP 1324290 A2 CN 1428963 A HK 1056801 A | |

Form PCT/ISA/210 (patent family annex) (January 2015)

**REFERENCES CITED IN THE DESCRIPTION**

**Patent documents cited in the description**

- JP 2016173732 A